Europäisches Patentamt

(19) European Patent Office

Office européen des brevets

(11) Numéro de publication: **0 011 026**
**B1**

(12) **FASCICULE DE BREVET EUROPEEN**

(45) Date de publication du fascicule du brevet: **02.06.82**

(51) Int. Cl.³: **F 16 B 5/01**

(21) Numéro de dépôt: **79400792.2**

(22) Date de dépôt: **24.10.79**

(54) Dispositif d'assemblage pour panneau en nid d'abeilles utilisé notamment dans la construction aéronautique.

(30) Priorité: **06.11.78 FR 7831314**

(43) Date de publication de la demande:
**14.05.80 Bulletin 80/10**

(45) Mention de la délivrance du brevet:
**02.06.82 Bulletin 82/22**

(84) Etats contractants désignés:
**AT BE CH DE GB IT LU NL SE**

(56) Documents cités:
**FR - A - 927 746**
**FR - A - 2 256 687**
**US - A - 2 967 593**

(73) Titulaire: **SHUR-LOK INTERNATIONAL S.A.**
**Société dite:**
**Rue du Midi 7-9**
**B-4822 Petit-Rechain (BE)**

(72) Inventeur: **Heurteux, Bernard Marc**
**12 Rue de l'Union**
**Verviers (BE)**

(74) Mandataire: **Lavoix, Jean et al,**
**c/o Cabinet Lavoix 2, Place D'Estienne D'Orves**
**F-75441 Paris Cedex 09 (FR)**

Courier Press, Leamington Spa, England.

Dispositif d'assemblage pour panneau en nid d'abeilles utilisé
notamment dans la construction aéronautique.

La présente invention est relative à un dispositif d'assemblage pour panneaux en nid d'abeilles, au moyen duquel un élément de construction, par exemple d'un aéronef, peut être assemblé à ce panneau.

Les panneaux en nid d'abeilles sont utilisés à grande échelle dans l'aéronautique en raison de leur rapport rigidité/poids très favorable. De tels panneaux comportent un réseau en nid d'abeilles sur les deux grandes faces duquel sont fixés, par collage par exemple, des couches ou peaux, lui donnant la résistance souhaitée. Ces panneaux sont utilisés notamment pour constituer les planchers dans les avions commerciaux.

Au cours de ces dernières années, les panneaux en nid d'abeilles ont subi un allégement important grâce à l'utilisation de fibres à haute résistance (fibres de verre ou au carbone, par exemple) dans les peaux recouvrant le réseau en nid d'abeilles. L'augmentation de la résistance ainsi obtenue permet, à charge égale, une diminution de l'épaisseur des peaux, d'une part et de la densité des cellules du réseau en nid d'abeilles, d'autre part, d'où résulte un important allégement des panneaux.

Si l'implantation dans les panneaux de dispositifs d'assemblage posait déjà des problèmes pour les réseaux en nid d'abeilles à haute densité, ce problème est encore aggravé pour un réseau à faible densité. L'expérience montre en effet, que les dispositifs de fixation traditionnels ("inserts" mécaniques ou noyés dans la colle, etc.) donnent de mauvais résultats surtout lorsque des efforts orientés à peu près dans le plan du panneau doivent être transmis à celui-ci. On a donc cherché à transmettre de tels efforts dans des conditions plus satisfaisantes qu'auparavant, ce qui a donné naissance aux dispositifs d'assemblage dont des parties plates sont assemblées aux peaux du panneau, c'est-à-dire aux éléments de celui-ci présentant la plus haute résistance.

Un dispositif d'assemblage connu, par exemple du US—A—2 967 593, permettant la transmission des efforts dans ces conditions comporte trois éléments traversant en tant qu'ensemble tubulaire une ouverture pratiquée dans le panneau, cet ensemble étant composé d'un manchon auquel s'adaptent deux douilles d'extrémité. Chaque douille d'extrémité s'épanouit à l'embouchure respective du perçage en un organe de renfort plat qui s'appuie sur la surface de la peau respective du panneau, dans la zone immédiate entourant l'ouverture. Cet ensemble tubulaire peut recevoir un organe d'assemblage tel que vis, goupille, broche ou autre. Le manchon est agencé de telle façon que ces extrémités s'encastrent en-dessous des bords des ouvertures des peaux et ces bords sont serrés entre les épanouissements des douilles et les faces d'extrémité du manchon, ce qui permet de transmettre les efforts du dispositif d'assemblage au panneau.

Le dispositif d'assemblage que l'on vient de décrire satisfait aux conditions de tenue mécanique imposées compte tenu des efforts qui peuvent y être engendrés lors des atterrissages en détresse ou des décélérations brutales de l'avion. Cependant, il présente notamment les inconvénients suivants:

— étant donné que chaque douille de l'ensemble tubulaire est d'une seule pièce, la quantité de matière qui doit être enlevée par usinage est élevée puisque le diamètre des épanouissements (en forme de rondelle) est nettement plus grand que celui de la partie cylindrique de la douille qui s'emboîte sur le manchon central. D'ailleurs, cette quantité de matière augmente avec l'importance de l'effort à transmettre, car plus cet effort est grand et plus il convient d'augmenter le diamètre des épanouissements de chaque douille.

— lorsque le dispositif d'assemblage est utilisé dans un panneau ayant une grande résistance à la flexion, une rupture en flexion peut apparaître dans la zone de raccordement de l'épanouissement à la partie cylindrique de l'un des éléments tubulaires.

— le manchon étant encastré entre les peaux et étant ainsi maintenu dans le réseau en nid d'abeilles, l'agencement connu ne peut pratiquement être utilisé qu'avec des panneaux dont les peaux sont en métal (acier inoxydable par exemple) et n'est donc pas compatible avec des panneaux dont les peaux sont réalisées à partir de matières plastiques chargées de fibres de carbone ou de verre.

Le FR—A—2 256 687 décrit un dispositif de rivetage pour panneaux en nid d'abeille dans lequel un manchon de profil intérieur initialement cylindrique est déformé par un rivet qui forme l'organe d'assemblage.

Cette déformation a pour but de refouler le matériau du manchon en-dessous du bord de l'ouverture pratiquée dans l'une des peaux du panneau. Une rondelle est prévue en-dessous de la tête du rivet. Cet ensemble ne permet guère de transmettre des efforts orientés dans le plan du panneau, tandis que par ailleurs l'organe d'assemblage est un rivet qui doit être spécialement conçu et ne peut donc être une simple vis normalisée. Enfin, cet ensemble ne comporte pas d'organe de consolidation destiné à assurer la liaison du manchon avec la peau du panneau.

L'invention a pour but de fournir un dispositif d'assemblage ne présentant pas les inconvénients de la technique antérieure et pouvant être fabriqué moyennant un prix de revient plus faible que celui du dispositif que l'on vient de décrire.

L'invention a donc pour objet un dispositif d'assemblage pour panneau comportant un réseau en nid d'abeilles recouvert sur ses deux grandes faces d'une peau conférant au panneau la rigidité nécessaire, ce dispositif comportant, d'une part un manchon placé dans une ouverture ménagée transversalement dans le panneau et destiné à être traversé par un organe d'assemblage tel que vis, broche ou autre, et, d'autre part, deux organes de consolidation qui sont destinés à contribuer à assurer la liaison du manchon avec les peaux du panneau, caractérisé en ce que lesdits organes de consolidation sont des plaquettes minces collées à la peau respective du panneau sur une zone qui entoure l'ouverture pratiquée dans le panneau et dont la superficie dépasse nettement l'aire de la section transversale du manchon, chaque plaquette comportant une ouverture au droit du manchon dont le bord est adapté à la forme de l'extrémité correspondante du manchon, pour assurer une transmission des efforts transversaux exercés sur le manchon par ledit organe d'assemblage sur une superficie des peaux correspondant au moins à l'étendue desdites plaquettes.

D'autres caractéristiques de l'invention apparaîtront au cours de la description qui va suivre donnée uniquement à titre d'exemple et faite en se référant au dessin annexé sur lequel:

— la Fig. 1 est une vue en coupe transversale selon la ligne 1—1 de la Fig. 2, d'un panneau en nid d'abeilles, muni d'un dispositif d'assemblage suivant l'invention;

— la Fig. 2 est une vue de dessus de la partie du panneau représentée sur la Fig. 1;

— la Fig. 3 est une vue en coupe d'un autre mode de réalisation du dispositif d'assemblage suivant l'invention, placé dans la zone marginale d'un panneau en nid d'abeilles;

— la Fig. 4 montre une variante du dispositif suivant l'invention.

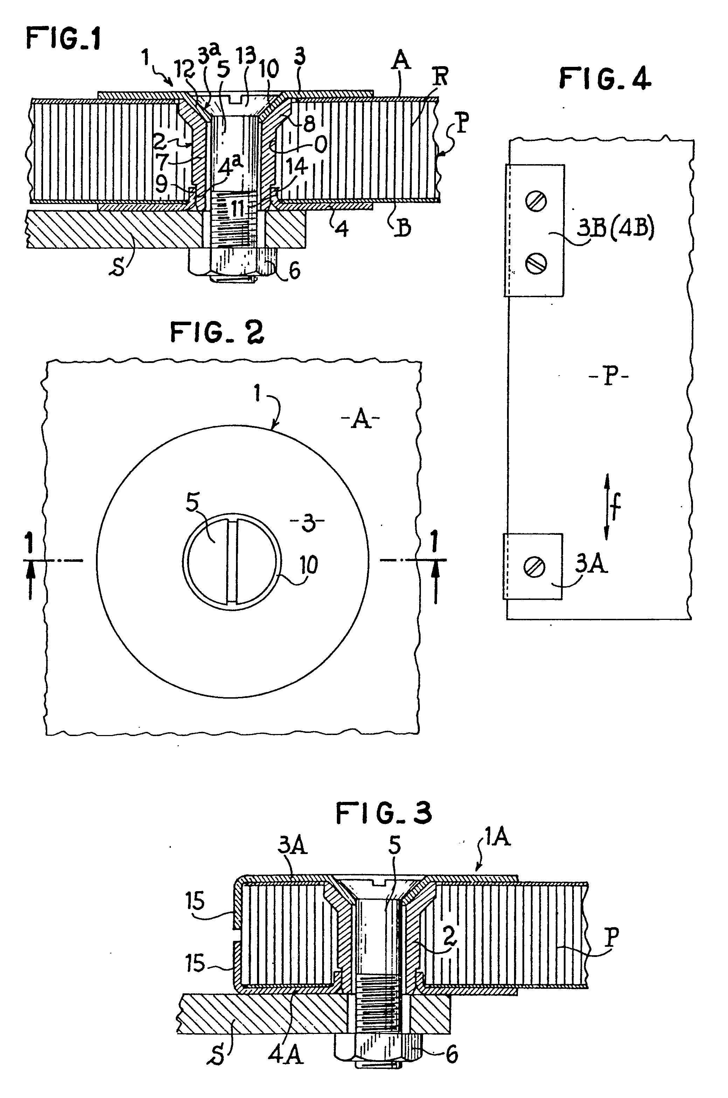

Sur les Fig. 1 et 2, on a représenté une partie d'un panneau P comportant un réseau R en nid d'abeilles recouvert sur ses deux faces par des peaux respectives A et B. Le dispositif d'assemblage 1 suivant l'invention comporte un manchon 2 engagé dans une ouverture O du panneau P, une première plaquette de renfort 3 ou plaquette supérieure et une seconde plaquette de renfort 4 ou plaquette inférieure, l'ensemble étant traversé par une vis 5 sur laquelle est vissé un écrou 6. Dans l'exemple décrit on suppose que le panneau P constitue une partie du plancher d'un avion et que ce panneau est fixé au fuselage de celui-ci à l'aide d'un bras de support S qui est serré contre le panneau à l'aide de l'écrou 6.

Le manchon 2 présente une partie intermédiaire cylindrique 7 à laquelle se raccorde vers le haut une partie évasée 8 débouchant à la surface extérieure de la peau A. A l'extrémité opposée, le manchon 2 présente une portée 9 dont le diamètre est inférieur à celui de la partie intermédiaire 7.

Les plaquettes 3 et 4 qui sont réalisées de préférence en tôle découpée et estampée et qui ont une forme circulaire par exemple, comprennent des perçages respectifs 10 et 11. La bordure du perçage 10 de la plaquette 3 présente une collerette de forme tronconique 12 dont la conicité 3a est identique à celle de la partie d'extrémité évasée 8 du manchon 2 et également à celle de la tête 13 de la vis 5.

La bordure du perçage 11 de la plaquette 4 présente une collerette 14 s'étendant à angle droit par rapport au reste de la plaquette 4, son diamètre intérieur 4a étant tel que la portée 9 du manchon 2 s'y adapte avec un ajustement serré.

Les parties planes des plaquettes 3 et 4 sont respectivement fixées par collage sur les peaux A et B dans les zones entourant l'ouverture O du panneau P.

Le montage de ce dispositif peut se dérouler de la façon suivante. On met en place la plaquette inférieure 4 en la centrant sur l'ouverture O à l'aide de la collerette 14 et on fixe la plaquette sur la face inférieure du panneau P à l'aide d'un adhésif. Puis, le manchon 2 est engagé dans l'ouverture O à partir de la face opposée du panneau et emmanché à force dans la collerette 14 par sa portée 9. Ensuite, on met en place la plaquette supérieure 3 qui, par sa collerette tronconique 12, vient s'ajuster dans la partie évasée 8 du manchon 2 et qui est collée à la peau supérieure A du panneau P. Après mise en place de ce dernier, la vis 5 est introduite dans le manchon 2, le bras de support S est engagé sur la vis et l'écrou 6 est bloqué sur celle-ci.

En raison du fait que les plaquettes 3 et 4 sont fabriquées séparément par estampage d'une tôle, leur prix de revient est comparativement très faible. A cela s'ajoute que leur dimension peut être choisie aussi grande que nécessaire pour assurer la rigidité de l'assemblage sans que cela ait une influence notable sur ce prix de revient.

Par ailleurs, le manchon 2 peut être réalisé par usinage sur un tour, sans grandes difficultés et avec des pertes minimales de matière.

Les Fig. 3 et 4 illustrent un avantage particulier résultant de l'utilisation des plaquettes selon l'invention. Dans ce cas, le dispositif d'assemblage 1A est destiné à être monté dans une partie de la zone marginale du panneau P. Pour augmenter la résistance à la flexion, dans une direction parallèle au bord du panneau (flèche f sur la Fig. 4), ce dispositif d'assemblage comporte des plaquettes 3A et 4A dont un bord 15 est replié autour du bord correspondant du panneau de façon à former une équerre. Il est évident qu'une telle forme ne peut être obtenue avec des douilles usinées comme dans la technique antérieure.

La Fig. 4 montre également que le dispositif d'assemblage peut être multiple en ce sens qu'il peut comporter des plaquettes 3B, 4B (seule la plaquette 3B est visible sur le dessin) qui comportent chacune plusieurs perçages (deux en l'occurrence) associés chacun à un manchon tel que le manchon 2 des Fig, 1 à 3. Ainsi, l'importance de chaque dispositif d'assemblage peut être choisie en fonction de la rigidité de la liaison devant être assurée à l'endroit de l'implantation du dispositif d'assemblage.

Bien entendu, le dispositif d'assemblage peut être réalisé selon d'autres variantes dans le cadre de l'invention. Par exemple, la forme de l'une des extrémités du manchon 2 peut varier, notamment en fonction de la configuration de la vis 5 (ou autre organe d'assemblage). Il est également possible de prévoir des emmanchements à force sur les plaquettes 3 et 4 aux deux extrémités du manchon 2.

**Revendications**

1. Dispositif d'assemblage pour panneau (P) comportant un réseau (R) en nid d'abeilles recouvert sur ses deux grandes faces d'une peau (A, B) conférant au panneau (P) la rigidité nécessaire, de dispositif comportant, d'une part un manchon (2) placé dans une ouverture (O) ménagée transversalement dans le panneau (P) et desinté à être traversé par un organe d'assemblage (5) tel que vis, broche ou autre, et, d'autre part, deux organes de consolidation (3, 4; 3A, 4A; 3B, 4B) qui sont destinés à contribuer à assurer la liaison du manchon (2) avec les peaux (A, B) du panneau (P), caractérisé en ce que lesdits organes de consolidation sont des plaquettes minces (3, 4; 3A, 4A; 3B, 4B) collées à la peau respective (A, B) du panneau (P) sur une zone qui entoure l'ouverture (O) pratiquée dans le panneau (P) et dont la superficie dépasse nettement l'aire de la section transversale du manchon (2), chaque plaquette comportant une ouverture (10, 11) au droit du manchon (2) dont le bord (12, 14) est adapté à la forme de l'extrémité correspondante (8, 9) du manchon pour assurer une transmission des efforts transversaux exercés sur le manchon par ledit organe d'assemblage sur une superficie des peaux correspondant au moins à l'étendue desdites plaquettes (3, 4; 3A, 4A, 3B, 4B).

2. Dispositif suivant la revendication 1, caractérisé en ce que le perçage (11) d'au moins l'une des plaquettes minces (4; 4A; 4B) est bordé par une collerette annulaire (14) obtenue par déformation de la plaquette et s'étendant perpendiculairement à son plan et en ce que l'extrémité correspondante du manchon (2) présente une portée (9) sur laquelle peut être emmanchée à force ladite collerette.

3. Dispositif suivant l'une quelconque des revendications 1 et 2, caractérisé en ce que, dans le cas où l'organe d'assemblage est une vis à tête fraisée conique, le perçage (10) de la plaquette (3; 3A; 3B) située du côté de cette tête (13) est bordé d'une collerette (12) de forme tronconique s'adaptant sur celle-ci et en ce que l'extrémité correspondante du manchon (2) présente une partie évasée (8) de forme tronconique, s'adaptant à son tour sur la face intérieure de cette collerette (12) tronconique.

4. Dispositif suivant l'une quelconque des revendications 1 à 3, caractérisé en ce que chaque plaquette (3, 4; 3A, 4A; 3B, 4B) est réalisée à partie d'une tôle de métal mince estampée.

5. Dispositif suivant l'une quelconque des revendications 1 à 4 et destiné à être monté dans la zone marginale d'un panneau en nid d'abeilles, caractérisé en ce qu'au moins l'une des plaquettes (3A, 4A; 3B, 4B) est pourvue d'un bord (15) replié à l'équerre et s'appliquant sur la tranche latérale du panneau en nid d'abeilles (P).

6. Dispositif d'assemblage multiple caractérisé en ce qu'il comporte plusieurs dispositifs d'assemblage simples suivant l'une quelconque des revendications précédentes et en ce que le ou les plaquettes (3B, 4B) de ces dispositifs ne forment respectivement qu'une seule pièce.

**Patentansprüche**

1. Vorrichtung zum Verbinden einer Platte (P), die aus einem Wabenzellennetz (R) besteht, das auf seinen beiden großen Flächen mit einer Haut (A, B) bedeckt ist, die der Platte (P) die notwendige Festigkeit verleihen, wobei diese Vorrichtung einerseits eine in eine die Platte (P) durchquerende Öffnung (O) eingesetzte Hülse (2) aufweist, durch die ein Befestigungsorgan (5), wie eine Schraube, ein Stift oder dergleichen hindurchsteckbar ist und andererseits mit zwei Verstärkungselementen (3, 4; 3A, 4A; 3B, 4B) versehen ist, die zur Sicherung der Verbindung der Hülse (2) mit den Häuten (A, B) der Platte (P) beitragen sollen, dadurch gekennzeichnet, daß die Verstärkungselemente aus dünnen Plättchen (3, 4; 3A, 4A; 3B, 4B) bestehen, die auf die jeweilige Haut (A, B) der Platte (P) auf eine Zone aufgeklebt sind, die die in der Platte (P) ausgebildete Öffnung (O) umgibt und deren Fläche die Querschnittsfläche der Hülse (2) deutlich überschreitet, wobei jedes Plättchen in der Nähe der Hülse (2) ein Loch (10, 11) aufweist, dessen Rand (12, 14) der Form des entsprechenden Endes (8, 9) der Hülse angepaßt ist, um eine Übertragung von Querkräften, die von dem Befestigungsorgan auf die Hülse ausgeübt werden, auf eine Fläche der Häute zu gewährleisten, die wenigstens der Erstreckung der Plättchen (3, 4; 3A, 4A, 3B, 4B) entspricht.

2. Vorrichtung nach Anspruch 1, dadurch gekennzeichnet, daß das Loch (11) wenigstens eines der dünnen Plättchen (4; 4A; 4B) mit einem durch Verformung des Plättchens entstandenen ringförmigen Kragen umrandet ist, der sich senkrecht zur Plättchenebene erstreckt, und daß das entsprechende Ende der Hülse (2) eine Stützfläche (9) bildet, auf die der Kragen aufpreßbar ist.

3. Vorrichtung nach Anspruch 1 oder 2, dadurch gekennzeichnet, daß bei einem Be-

festigungsorgan in Form einer Senkkopf-schraube das Loch (10) des an der Seite des Kopfes (13) dieser Schraube befindlichen Plättchens (3; 3A; 3B) mit einem diesem angepaßten kegelstumpfförmigen Kragen (12) umrandet ist, und daß das entsprechende Ende der Hülse (2) einen kegelstumpfförmigen erweiterten Teil (8) aufweist, der seinerseits der Innenfläche dieses kegelstumpfförmigen Kragens (12) angepaßt ist.

4. Vorrichtung nach einem der Ansprüche 1 bis 3, dadurch gekennzeichnet, daß jedes Plättchen (3, 4; 3A, 4A; 3B, 4B) aus dünnem Stanzmetallblech hergestellt ist.

5. Vorrichtung nach einem der Ansprüche 1 bis 4 zur Anbringung in der Randzone einer Wabenzellenplatte, dadurch gekennzeichnet, daß wenigstens eines der Plättchen (3A, 4A; 3B, 4B) einen winkelförmig umgebogenen Rand (15) aufweist, der auf der Seitenkante der Wabenzellenplatte (P) angeordnet ist.

6. Vielfach-Verbindungsvorrichtung, dadurch gekennzeichnet, daß sie mehrere Einfach-Verbindungsvorrichtungen nach einem der vorangegangenen Ansprüche aufweist, und daß das oder die Plättchen (3B, 4B) dieser Vorrichtungen jeweils nur ein einziges Stück bilden.

## Claims

1. A fastening device for a panel (P) comprising a honeycombed network (R) covered on both of its large sides with a skin (A, B) imparting the required stiffness to the panel (P), said device comprising a sleeve (2) placed in an opening (O) formed transversely in the panel (P) and adapted to have extending therethrough a fastening member (5) such as a screw, pin or other member, and two strengthening means (3, 4; 3A, 4A; 3B, 4B) which are adapted to contribute to the connection of the sleeve (2) with the skins (A, B) of the panel (P), characterized in that said strengthening means are thin plates (3, 4; 3A, 4A; 3B, 4B) which are adhered to the respective skin (A, B) of the panel (P) in a region which surrounds the opening (O) formed in the panel (P) and have an area which distinctly exceeds the area of the cross section of the sleeve (2), each plate comprising an opening (10, 11) in alignment with the sleeve (2), the edge (12, 14) of the opening of the plate being adapted to the shape of the corresponding end (8, 9) of the sleeve so as to ensure the transmission of the transverse forces exerted on the sleeve by said fastening member to an area of the skins corresponding to at least the extent of said plates (3, 4; 3A, 4A; 3B, 4B).

2. A device as claimed in claim 1, characterized in that the aperture (11) of at least one of the thin plates (4; 4A; 4B) is bordered by an annular flange (14) obtained by deformation of the plate and extending in a direction perpendicular to its plane, and the corresponding end portion of the sleeve (2) has a bearing surface (9) on which said flange may be an interference fit.

3. A device as claimed in claim 1 or 2, characterized in that in the case where the fastening member is a screw having a part conical countersunk head, the aperture (10) of the plate (3, 3A; 3B) located adjacent to said head (13) is bordered by a frustoconical flange which conforms to said head and the corresponding end portion of the sleeve (2) has a frustoconical flared portion (8) which also conforms to the inner face of the frustoconical flange (12).

4. A device as claimed in any one of the claims 1 to 3, characterized in that each plate (3, 4; 3A, 4A; 3B, 4B) is made from a blanked thin sheet metal.

5. A device as claimed in any one of the claims 1 to 4, adapted to be mounted in a marginal region of a honeycomb panel, characterized in that at least one of the plates (3A, 4A; 3B, 4B) is provided with a flange (15) folded at a right angle and bearing against the lateral edge of the honeycomb panel (R).

6. A multiple fastening device comprising a plurality of single fastening devices according to any one of the preceding claims, the plate or plates (3B, 4B) of these devices respectively forming a single member.

FIG.1

0011026

FIG.4

FIG. 2

FIG.3